# EUROPÄISCHE PATENTSCHRIFT

(11) **EP 3 642 586 B1**
(45) Veröffentlichungstag und Bekanntmachung des Hinweises auf die Patenterteilung: **25.08.2021**
(21) Anmeldenummer: 18753073.8
(22) Anmeldetag: 25.07.2018
(51) Int. Cl.: G01M 13/02

(54) **PRÜFSTAND ZUM PRÜFEN EINER ANTRIEBSACHSE FÜR EIN KRAFTFAHRZEUG**
TEST BENCH FOR TESTING A DRIVE AXLE OF A VEHICLE
BANC D'ESSAI POUR TESTER UN ESSIEU MOTEUR D'UN VÉHICULE

(30) Priorität: 28.07.2017 EP 17183767
(43) Veröffentlichungstag der Anmeldung: 29.04.2020
(73) Patentinhaber: Siemens Aktiengesellschaft, 80333 München (DE)
(72) Erfinder: KORZUSCHNIK, Michael, 91077 Hetzles (DE)
(86) Internationale Anmeldenummer: PCT/EP2018/070127
(87) Internationale Veröffentlichungsnummer: WO 2019/020670

(56) Entgegenhaltungen:
- EP-A2- 1 837 538
- DE-A1- 3 818 661
- DE-A1-102011 085 611
- US-A1- 2013 055 804

## Beschreibung

Die Erfindung betrifft einen Prüfstand zum Prüfen einer Antriebsachse für ein Kraftfahrzeug mit mindestens einer Antriebsvorrichtung, mindestens einer Belastungsvorrichtung und mindestens einer Aufnahmevorrichtung.

Die Erfindung betrifft darüber hinaus ein Verfahren zum Prüfen einer Antriebsachse für ein Kraftfahrzeug in einem Prüfstand.

Derartige Antriebsachsen kommen insbesondere in Personenkraftwagen und Nutzfahrzeugen vor. Die Antriebsachse soll zur Durchführung einer Prüfung, beispielsweise zur Ermittlung eines Verschleißes oder einer Lebensdauer, in einem Prüfstand eingebaut werden. Untersuchungen in einem derartigen Prüfstand sind kostengünstiger und zuverlässiger, da das Ergebnis weniger stark von äußeren Bedingungen abhängt. Ferner lassen sich Tests im Prüfstand, im Vergleich zu einer Testfahrt in einem Fahrzeug, leichter reproduzieren. Der Prüfstand soll in der Lage sein, beispielsweise verschiedene Radlasten und Achslasten realistisch nachzubilden. Neben einer statischen und dynamischen Belastung der Achse ist auch eine Aufhängung für eine realistische Lastverteilung erforderlich.

Die Patentschrift EP 0 293 425 B1 beschreibt ein Verfahren zum Prüfen von Antriebsachsen für Kraftfahrzeuge, bei welchem die Antriebsachse, bestehend aus Achsgehäuse, Achsgetriebe und mindestens einer Achswelle, in einen Prüfstand eingespannt, antriebsseitig angetrieben und abtriebsseitig gebremst wird, wobei bei der Prüfung der Gesamtfunktion der Achse, bestehend aus Antriebs- und Tragfunktion, die Achse in angetriebenem Zustand durch von Antrieb und Bremsen unabhängige Zusatzkräfte belastet wird.

Die Offenlegungsschrift DE 3 818 661 A1 beschreibt eine Prüfeinrichtung zur Erprobung komplexer Antriebssysteme, z.B. angetriebener Fahrzeugachsen, bei der von einem Rechner erstellte Lastkollektive über eine Vorrichtung unmittelbar auf die Radköpfe derartiger Fahrzeugachsen aufgegeben werden. Die Vorrichtung beinhaltet ansteuerbare Stellglieder zur Erzeugung von Quer- und Längskräften sowie von Kräftepaaren. Ferner wird die Vorrichtung über einen elektrischen Simulationsantrieb angetrieben. Die ansteuerbaren Stellglieder und der elektrische Simulationsantrieb sind über eine Steuereinrichtung mit dem Rechner untereinander verknüpft, sodass sich ein beliebiges Lastkollektiv erzeugen lässt.

Die Offenlegungsschrift DE 10 2012 101 613 A1 beschreibt einen Prüfstand für Kraftfahrzeuge bzw. Achsen von Kraftfahrzeugen zur Fahrwerksentwicklung, auf welchen zusätzlich Kreiselmomente eines drehenden Rades simuliert werden können. Der Prüfstand weist ein mit zumindest einer Achse des Kraftfahrzeugs verbundenes Radersatzsystem auf, welches eine Radersatzmasse und Mittel zum Antrieb der Radersatzmasse enthält. Der Prüfstand weist ferner eine Anordnung zur Einleitung von Prüfkräften, -momenten und -bewegungen in Längs-, Quer- und/oder Höhenrichtung in das Kraftfahrzeug bzw. die Achsen des Kraftfahrzeugs auf, wobei die Mittel zum Antrieb der Radersatzmasse geeignet sind, die Radersatzmasse in Drehung zu versetzen und die Anordnung zur Einleitung von Prüfkräften, -momenten und -bewegungen geeignet ist, durch Einleitung von Prüfkräften, -momenten und -bewegungen in Längs-, Quer- und/oder Höhenrichtung in das Kraftfahrzeug bzw. die Achsen des Kraftfahrzeugs ein Kreiselmoment der in Drehung versetzten Radersatzmasse zu erzeugen.

Die Offenlegungsschrift EP 1 837 538 A2 beschreibt ein Gelenklager, das einen Innenring und einen Außenring aufweist, wobei der Außenring eine Länge und einen Außenumfang aufweist, die eine erste Schulter definieren, die an einem Ende entlang der Länge angeordnet ist, und eine zweite Schulter, die an einem zweiten Ende entlang der Länge angeordnet ist, wobei das zweite Ende im Allgemeinen dem ersten Ende gegenüberliegt. Die erste und die zweite Schulter sind so dimensioniert sind, dass sie gegen eine Gehäusewand drücken, wobei die Gehäusewand eine Bohrung definiert, in der das Gelenklager positioniert ist.

Die Offenlegungsschrift DE 10 2011 085611 A1 beschreibt ein Konzept zur Abdichtung einer Lagerkomponente für ein Lager, die eine Befestigungsmöglichkeit zur Befestigung an einem zu lagernden Bauelement umfasst, wobei die Lagerkomponente oder das zu lagernde Bauteil eine Ausnehmung für eine Dichtung aufweist, derart dass die Lagerkomponente mit dem zu lagernden Bauelement zumindest wasserdicht verbindbar ist.

Die Offenlegungsschrift US 2013/055804 A1 beschreibt einen Prüfstand zur dynamischen Prüfung einer einzelnen Fahrwerkskomponente oder eines kompletten Achssystems eines Kraftfahrzeugs. Der Prüfstand beinhaltet einen Prüfstandrahmen. Der Prüfstandrahmen hat einen Montagebereich, der für die Montage des kompletten Achssystems im Montagebereich in einer ersten Montagerichtung vorgesehen ist. Eine Befestigungsvorrichtung ist vorgesehen für die feste Montage der einzelnen Fahrwerkskomponenten auf der Befestigungsvorrichtung in einer zweiten Montagerichtung, wobei sich die zweite Montagerichtung von der ersten Montagerichtung unterscheidet.

Der Erfindung liegt die Aufgabe zugrunde, eine Aufnahmevorrichtung zur Aufnahme einer Antriebsachse eines Kraftfahrzeugs für einen Prüfstand bereitzustellen, mit der eine, im Vergleich zum Stand der Technik, realistischere Lastverteilung erzielt wird.

Diese Aufgabe wird erfindungsgemäß nach Anspruch 1 durch einen Prüfstand zum Prüfen einer Antriebsachse für ein Kraftfahrzeug mit mindestens einer Antriebsvorrichtung, mindestens einer Belastungsvorrichtung und mindestens einer derartigen Aufnahmevorrichtung gelöst, wobei die Aufnahmevorrichtung mindestens eine äußere Einheit zur Verbindung mit dem Prüfstand und mindestens eine von der äußeren Einheit zumindest teilweise umschlossene innere Einheit aufweist, wobei die innere Einheit relativ zur äußeren Einheit translatorisch fest und um mehr als eine Achse rotatorisch flexibel ausgestaltet ist und wobei die innere Einheit eine zur Aufnahme der Antriebsachse geeignete Ausnehmung aufweist.

Ferner wird die Aufgabe erfindungsgemäß nach Anspruch 16 durch ein Verfahren zum Prüfen einer Antriebsachse für ein Kraftfahrzeug in einem Prüfstand mit mindestens einer Antriebsvorrichtung, mindestens einer Belastungsvorrichtung und mindestens einer Aufnahmevorrichtung gelöst, wobei die Aufnahmevorrichtung mindestens eine äußere Einheit zur Verbindung mit dem Prüfstand und mindestens eine von der äußeren Einheit zumindest teilweise umschlossene innere Einheit aufweist, wobei die innere Einheit relativ zur äußeren Einheit translatorisch fest und um mehr als eine Achse rotatorisch flexibel angeordnet wird und wobei die Antriebsachse von einer Ausnehmung der inneren Einheit aufgenommen wird.

Die in Bezug auf die Aufnahmevorrichtung nachstehend angeführten Vorteile und bevorzugten Ausgestaltungen lassen sich sinngemäß auf den Prüfstand und das Prüfverfahren übertragen. Der Erfindung liegt die Überlegung zugrunde, eine Aufnahmevorrichtung für eine Antriebsachse in einem Prüfstand anzugeben, in der die Antriebsachse hinsichtlich ihrer Belastung und Lastverteilung möglichst realistisch aufgenommen ist. Um eine realistische Aufnahme zu gewährleisten, wird die Antriebsachse über eine, insbesondere an den originalen Aufhängepunkten angebrachte, innere Einheit fest und stabil aufgenommen. Die Aufnahme der Antriebsachse erfolgt damit insbesondere wie im Fahrzeug. Die innere Einheit ist von einer äußeren Einheit zumindest teilweise umschlossen, wobei die innere Einheit mit der Antriebsachse relativ zur äußeren Einheit translatorisch fest und um mehr als eine Achse rotatorisch flexibel angeordnet ist, sodass, insbesondere im Bezug auf eine Krafteinprägung und Momenteneinprägung, die gleichen Freiheitsgrade wie im Fahrzeug bestehen. Durch eine derartige Aufnahme der Antriebsachse wird eine realistische Lastverteilung erzielt.

In einer bevorzugten Ausgestaltung weist die innere Einheit eine teilweise kugelförmige Oberfläche auf. Insbesondere weist die innere Einheit eine äquatorialsymmetrisch kugelschichtförmige Oberfläche auf. Eine Kugelschicht, auch Kugelscheibe genannt, ist ein Teil einer Vollkugel, der von zwei parallelen Ebenen ausgeschnitten wird. Bei einer äquatorialsymmetrischen Kugelschicht ist die Fläche der beiden parallelen kreisförmigen Schnittflächen gleich groß. Der runde Bereich der Kugelschicht bildet eine Kontaktfläche zur äußeren Einheit. Durch eine derartige teilweise kugelförmige Oberfläche ist die innere Einheit dreidimensional drehbar und wird durch die äquatorialsymmetrische Ausgestaltung gegenüber Translation unbeweglich.

In einer weiteren bevorzugten Ausführungsform weist die äußere Einheit zumindest im Bereich einer Auflagefläche für die innere Einheit eine zur teilweise kugelförmigen Oberfläche der inneren Einheit korrespondierende Kontaktfläche auf. Eine korrespondierende Kontaktfläche ist insbesondere eine teilweise kugelförmige Aussparung, die im Wesentlichen dem Inversen der teilweise kugelförmigen Oberfläche der inneren Einheit entspricht. Insbesondere durch eine äquatorialsymmetrische Ausgestaltung der korrespondierenden Kontaktfläche ist die innere Einheit von der äußeren Einheit teilweise umschlossen, wobei die innere Einheit relativ zur äußeren Einheit translatorisch fest und rotatorisch flexibel ist.

In einer weiteren vorteilhaften Ausgestaltung sind die teilweise kugelförmige Oberfläche der inneren Einheit und/oder die korrespondierende Kontaktfläche der äußeren Einheit, insbesondere mit einer Molybdän aufweisenden Beschichtung, beschichtet. Zumindest eine der Flächen ist einsatzgehärtet, anschließend manganphosphatiert und mit einem Gleitlack auf Basis Molybdändisulfid beschichtet Alternativ wird eine Molybdänbeschichtung durch Flammspritzen auf zumindest eine der Flächen aufgetragen, wobei die Molybdänbeschichtung aufgrund ihrer metallurgischen Eigenschaften ein sehr gutes Haftvermögen aufweist. Die Schichtdicke der Molybdänbeschichtung liegt zwischen 0,1 mm und 2,0 mm. Eine derartige Beschichtung optimiert das Reibverhalten zwischen der inneren Einheit und der äußeren Einheit.

Besonders vorteilhaft ist die innere Einheit zumindest zweiteilig ausgeführt. Durch eine zweiteilige Ausführung ist die Antriebsachse leicht und schnell montierbar.

In einer weiteren bevorzugten Ausführungsform weist die Belastungsvorrichtung Mittel zur Radnabenlagerung auf, über welche eine Belastungsmaschine mit der Antriebsachse verbindbar ist. Die Mittel zur Radnabenlagerung umfassen insbesondere mindestens eine Lagereinheit durch welche die Antriebsachse realitätsnah mit der Belastungsvorrichtung verbunden ist.

Besonders vorteilhaft umfassen die Mittel zur Radnabenlagerung eine Lagereinheit zur Aufnahme einer axialen Kraft. Die Lagereinheit ist insbesondere axial flexibel an einer Radnabe angebracht. Durch eine derartige Lagereinheit wird eine axialkraftfreie Belastung der Antriebsachse ermöglicht.

In einer weiteren vorteilhaften Ausgestaltung weist die Belastungsvorrichtung mindestens einen Hydraulikzylinder zur Belastung der Antriebsachse mit einer, insbesondere dynamischen, Zusatzkraft auf. Die dynamische Zusatzkraft wird durch Heben und Senken des Hydraulikzylinders erzeugt und wirkt insbesondere radial auf die Antriebsachse. Durch eine derartige radial auf die Antriebsachse wirkende dynamische Zusatzkraft sind beispielsweise Bodenunebenheiten im Prüfstand nachbildbar.

Besonders vorteilhaft weist die Belastungsvorrichtung Druckstangen zur Übertragung einer, insbesondere dynamischen, Zusatzkraft auf. Durch die Druckstangen ist die Kraftrichtung der, insbesondere dynamischen, Zusatzkraft variierbar, was eine realistische Simulation von Fahreigenschaften und Fahrsituationen ermöglicht.

In einer vorteilhaften Ausführungsform weist der Prüfstand einen Schwenkantrieb zur Simulation einer Steigung und/oder eines Gefälles auf. Durch den Schwenkantrieb werden Fahreigenschaften in verschiedenen Fahrsituationen noch realistischer nachgebildet.

In einer weiteren vorteilhaften Ausgestaltung weist der Prüfstand Mittel zur schwingungstechnischen Entkopplung des Prüfstands von einem Fundament auf. Durch eine derartige schwingungstechnische Entkopplung des Prüfstands vom Fundament wird das Ergebnis der Prüfung der Antriebsachse durch Fremdeinwirkung, beispielsweise durch weitere Prüfstände oder durch andere Maschinen, nicht verfälscht. Umgekehrt werden Störungen, die vom Prüfstand ausgehen, nicht an das Fundament übertragen.

Vorteilhaft umfassen die Mittel zur schwingungstechnischen Entkopplung des Prüfstands Federelemente. Die Verwendung von Federelementen ermöglicht eine einfache und kostengünstige Entkopplung des Prüfstands vom Fundament.

Im Folgenden wird die Erfindung anhand der in den Figuren dargestellten Ausführungsbeispiele näher beschrieben und erläutert. Es zeigen:
- FIG 1: eine dreidimensionale Darstellung eines Prüfstands für eine Antriebsachse eines Kraftfahrzeugs,
- FIG 2: eine Schnittdarstellung eines Prüfstands für eine Antriebsachse eines Kraftfahrzeugs im Bereich einer Aufnahmevorrichtung,
- FIG 3: einen dreidimensionalen Ausschnitt eines Prüfstands für eine Antriebsachse eines Kraftfahrzeugs im Bereich einer Aufnahmevorrichtung,
- FIG 4: eine dreidimensionale Darstellung einer inneren Einheit einer Aufnahmevorrichtung und
- FIG 5: einen Querschnitt der Aufnahmevorrichtung mit der Antriebsachse.

Gleiche Bezugszeichen haben in den verschiedenen Figuren die gleiche Bedeutung.

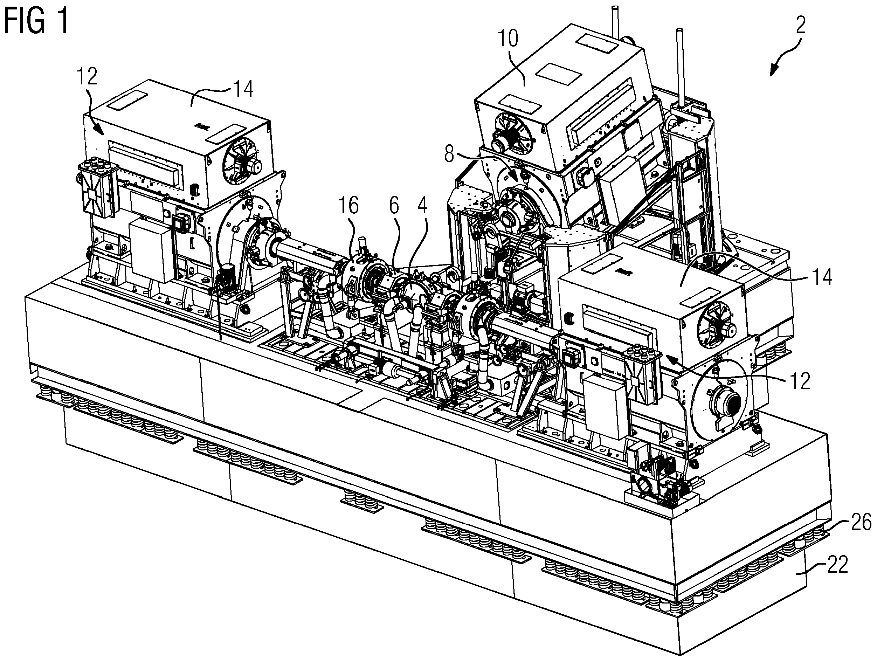

FIG 1 zeigt eine dreidimensionale Darstellung eines Prüfstands 2 für eine Antriebsachse 4 eines Kraftfahrzeugs, wobei die Antriebsachse 4 zur Prüfung in einer Aufnahmevorrichtung 6 angeordnet ist. Die Antriebsachse 4 wird von der Aufnahmevorrichtung 6 an originalen Aufhängepunkten translatorisch fest und rotatorisch flexibel aufgenommen. Die Antriebsachse 4 hat somit in Bezug auf eine Krafteinprägung und Momenteinprägung die gleichen Freiheitsgrade wie im eingebauten Zustand im Fahrzeug.

Die Antriebsachse 4 umfasst ein Achsgehäuse, ein Achsgetriebe und mindestens eine Achswelle. Der Prüfstand 2 umfasst eine Antriebsvorrichtung 8, welche einen Antriebsmotor 10 aufweist. Der Antriebsmotor 10 ist beispielsweise über eine Kardanwelle, welche aus Gründen der Übersichtlichkeit in FIG 1 nicht dargestellt ist, mit dem Achsgetriebe der Antriebsachse 4, das als Differentialgetriebe ausgebildet ist, verbunden. Abtriebsseitig ist die Antriebsachse 4 an beiden Seiten mit einer Belastungsvorrichtung 12 verbunden, wobei die Belastungsvorrichtung 12 an beiden Seiten eine Belastungsmaschine 14 aufweist. Die Belastungsmaschinen 14 sind beispielsweise als elektrische Motoren ausgeführt. Die Antriebsachse 4 ist durch die Belastungsmaschinen 14 sowohl statisch als auch dynamisch, insbesondere oszillierend, sowie auf beiden Seiten unterschiedlich belastbar. Über den Antriebsmotor 10 der Antriebsvorrichtung 8 wird die Antriebsachse 4 antriebsseitig angetrieben und über die Belastungsmaschinen 14 der Belastungsvorrichtung 12 abtriebsseitig gebremst.

Die Belastungsvorrichtung 12 weist beidseitig angeordnete Lagereinheiten 16 auf, die axial flexibel an Radnaben der Antriebsachse 4 angebaut sind. Die Lagereinheiten 16 ermöglichen durch Aufnahme von axialen Kräften eine axialkraftfreie Belastung der Antriebsachse 4.

Durch eine derartige Aufnahme und Belastung der Antriebsachse 4 werden die Biegemomente auf alle Teile der Achse optimal nachgebildet. Mit Hilfe des Prüfstands 2 wird die Antriebsachse 4 unter Berücksichtigung realer Radlasten getestet. Um Fremdeinwirkungen zu minimieren wird der Prüfstand 2 schwingungstechnisch von einem Fundament 22 entkoppelt. Die schwingungstechnische Entkopplung des Prüfstands 2 vom Fundament erfolgt über Federelemente 22.

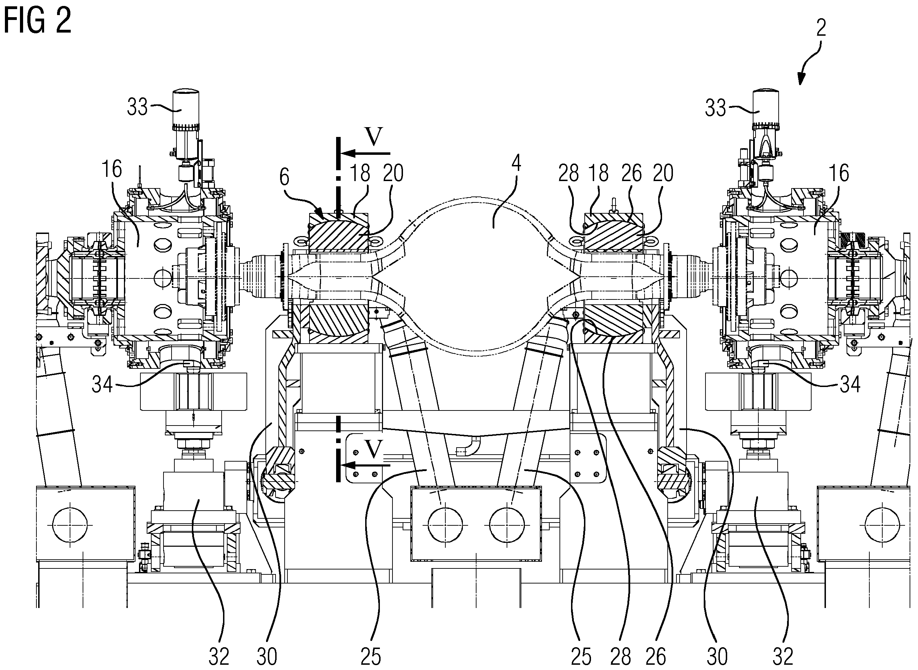

FIG 2 zeigt eine Schnittdarstellung eines Prüfstands 2 für eine Antriebsachse 4 eines Kraftfahrzeugs im Bereich einer Aufnahmevorrichtung 6. Die aufgenommene Antriebsachse 4 wird über Kühlrohre 25 mit einem Kühlmittel, beispielsweise Luft, gekühlt. Das Kühlmittel, welches durch die Kühlrohre 25, beispielsweise über Düsen, auf die Antriebsachse 4 geleitet wird, simuliert insbesondere einen Fahrtwind.

Die Aufnahmevorrichtung 6 der Antriebsachse 4 umfasst auf beiden Seiten des Achsgetriebes jeweils eine äußere Einheit 18 zur Verbindung mit dem Prüfstand 2 und jeweils eine von der äußeren Einheit 18 teilweise umschlossene innere Einheit 20. Die innere Einheit 20 weist eine teilweise kugelförmige Oberfläche 26 auf, wobei die innere Einheit 20 im Bereich einer Wölbung der teilweise kugelförmigen Oberfläche 26 auf der äußeren Einheit 18 aufliegt. Die äußere Einheit 18 weist im Bereich einer Auflagefläche zwischen äußerer Einheit 18 und innerer Einheit 20 eine zur teilweise kugelförmigen Oberfläche 26 der inneren Einheit 20 korrespondierende Kontaktfläche 28 auf. Die innere Einheit 20 ist zweiteilig ausgeführt, wobei die Antriebsachse 4 zumindest formschlüssig mit der inneren Einheit 20 verbunden ist. Die innere Einheit 20 ist durch ihre teilweise kugelförmige Oberfläche 26 translatorisch fest und rotatorisch flexibel in der äußeren Einheit 18 aufgenommen. Darüber hinaus ist beidseitig jeweils ein Schwenkantrieb 30 zur Simulation einer Steigung und/oder eines Gefälles an der Aufnahmevorrichtung 6 des Prüfstands 2 angebracht

Die Antriebsachse 4 ist in einem angetriebenen Zustand durch von Antrieb und Bremsen unabhängige dynamische Zusatzkräfte belastbar, welche beispielsweise Bodenunebenheiten simulieren. Die Zusatzkräfte umfassen insbesondere Vortriebskräfte, welche beispielsweise beim Bremsen und Beschleunigen eines Kraftfahrzeugs auftreten, und Biegemomente, welche beispielsweise bei Kurvenfahrten oder bei einer seitlichen Schräglage des Kraftfahrzeugs auftreten. Die Zusatzkräfte werden hydraulisch über Hydraulikzylinder 32 erzeugt, welche unterhalb der Lagereinheiten 16 angeordnet sind. Die Lagereinheiten 16 werden über automatische Schmiervorrichtungen 33 geschmiert, welche bei Bedarf ein Schmiermittel, insbesondere Fett, über Düsen in die Lagereinheiten drücken. Zumindest ein Teil der Zusatzkräfte wird über Druckstangen 34 übertragen. Die weitere Ausführung des Prüfstandes 2 in FIG 2 entspricht der Ausführung in FIG 1.

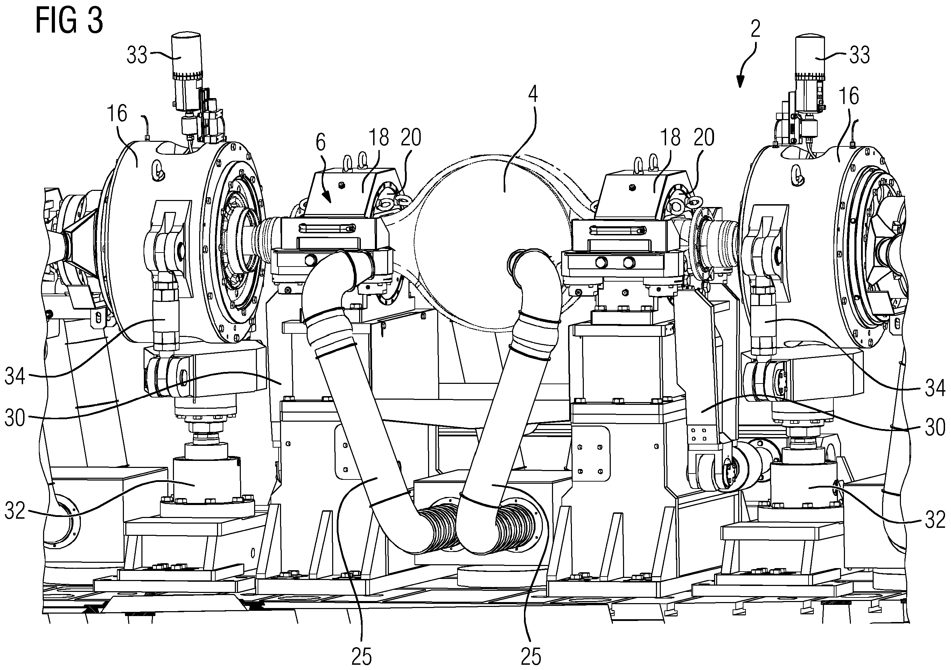

FIG 3 zeigt einen dreidimensionalen Ausschnitt eines Prüfstands 2 für eine Antriebsachse 4 eines Kraftfahrzeugs im Bereich einer Aufnahmevorrichtung 6. Die Ausführung des Prüfstandes 2 in FIG 3 entspricht der Ausführung in FIG 2.

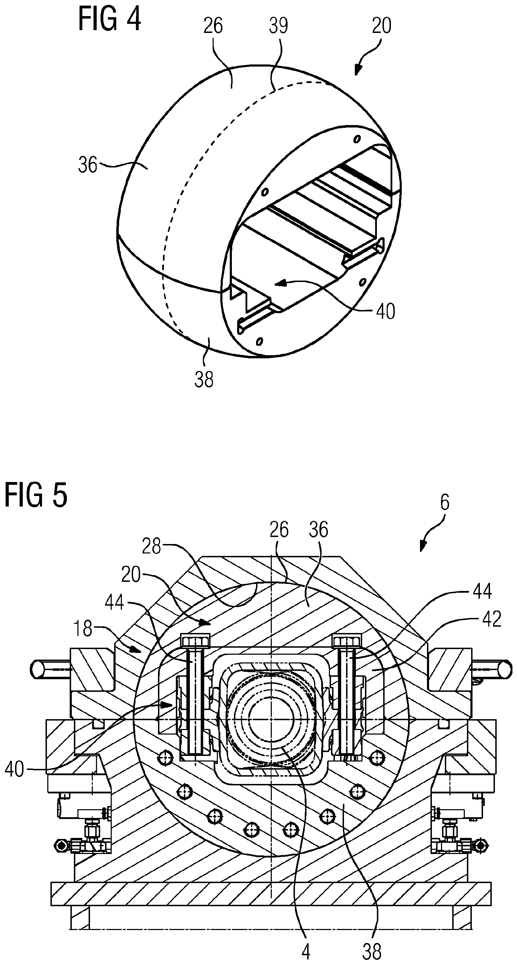

FIG 4 zeigt eine dreidimensionale Darstellung einer inneren Einheit 20 einer Aufnahmevorrichtung 6. Die innere Einheit 20 wird aus Stahl hergestellt und weist eine teilweise kugelförmige Oberfläche 26 auf. Die teilweise kugelförmige Oberfläche 26 der inneren Einheit hat die Form einer zu einem Äquator 39 symmetrischen Kugelschicht und wird deshalb als eine äquatorialsymmetrische Kugelschicht bezeichnet. Der runde Bereich der zum Äquator 39 symmetrischen Kugelschicht ist als Kontaktfläche für die äußere Einheit 18 vorgesehen und ist einsatzgehärtet, anschließend manganphosphatiert und mit einem Gleitlack auf Basis Molybdändisulfid beschichtet, um das Reibverhalten zu optimieren.

Darüber hinaus ist die innere Einheit 20 zweiteilig ausgeführt, wobei der erste Teil 36 und der zweite Teil 38 über Verbindungselemente, beispielsweise Stifte, Schrauben oder Bolzen, zusammengesteckt oder alternativ lösbar miteinander verbunden sind. Darüber hinaus umfasst die innere Einheit 20 eine Ausnehmung 40 zur Aufnahme der Antriebsachse 4, wobei die Antriebsachse 4 durch eine Verbindung der Teile 36, 38 der inneren Einheit 20 befestigt wird.

FIG 5 zeigt einen Querschnitt der Aufnahmevorrichtung 6 mit der Antriebsachse 4, wobei die Antriebsachse 4 über eine Adaptereinheit 42 in der Ausnehmung 40 der in FIG 4 dargestellten inneren Einheit 20 aufgenommen ist. Die Adaptereinheit 42 ist über Verbindungselemente 44, insbesondere Schrauben oder Bolzen, mit den originalen Aufhängepunkten der Antriebsachse 4 verbunden. Die innere Einheit 20, welche mit der Antriebsachse fest verbunden ist, ist in der äußeren Einheit 18 translatorisch fest und rotatorisch flexibel aufgenommen, wobei die beschichtete teilweise kugelförmige Oberfläche 26 der inneren Einheit 20 beweglich auf der korrespondierenden Kontaktfläche 28 der äußeren Einheit 18 gelagert ist. Die korrespondierende Kontaktfläche 28 der äußeren Einheit 18 ist insbesondere ebenfalls einsatzgehärtet, anschließend manganphosphatiert und mit einem Gleitlack auf Basis Molybdändisulfid beschichtet, um das Reibverhalten zu optimieren. Die weitere Ausführung der Aufnahmevorrichtung 6 entspricht der Ausführung in FIG 2.

Zusammenfassend betrifft die Erfindung eine Aufnahmevorrichtung 6 zur Aufnahme einer Antriebsachse 4 eines Kraftfahrzeugs für einen Prüfstand 2. Um eine, im Vergleich zum Stand der Technik, realistischere Lastverteilung zu erzielen, wird vorgeschlagen, dass die Aufnahmevorrichtung 6 mindestens eine äußere Einheit 18 zur Verbindung mit dem Prüfstand 2 und mindestens eine von der äußeren Einheit 18 zumindest teilweise umschlossene innere Einheit 20 aufweist, wobei die innere Einheit 20 relativ zur äußeren Einheit 18 translatorisch fest und zumindest um eine Achse rotatorisch flexibel ausgestaltet ist und wobei die innere Einheit 20 eine zur Aufnahme der Antriebsachse 4 geeignete Ausnehmung 40 aufweist.

## Patentansprüche

1. Prüfstand (2) zum Prüfen einer Antriebsachse (4) für ein Kraftfahrzeug mit mindestens einer Antriebsvorrichtung (8), mindestens einer Belastungsvorrichtung (12) und mindestens einer Aufnahmevorrichtung (6) zur Aufnahme der Antriebsachse (4) eines Kraftfahrzeugs, **dadurch gekennzeichnet, dass** die Aufnahmevorrichtung (6) mindestens eine äußere Einheit (18) zur Verbindung mit dem Prüfstand (2) und mindestens eine von der äußeren Einheit (18) zumindest teilweise umschlossene innere Einheit (20) aufweist,
wobei die innere Einheit (20) relativ zur äußeren Einheit (18) translatorisch fest und um mehr als eine Achse rotatorisch flexibel ausgestaltet ist und
wobei die innere Einheit (20) eine zur Aufnahme der Antriebsachse (4) geeignete Ausnehmung (40) aufweist.

2. Prüfstand (2) nach Anspruch 1,
wobei die innere Einheit (20) eine teilweise kugelförmige Oberfläche (26) aufweist.

3. Prüfstand (2) nach Anspruch 2,
wobei die äußere Einheit (18) zumindest im Bereich einer Auflagefläche für die innere Einheit (20) eine zur teilweise kugelförmigen Oberfläche (26) der inneren Einheit (20) korrespondierende Kontaktfläche (28) aufweist.

4. Prüfstand (2) nach einem der Ansprüche 2 oder 3,
wobei die teilweise kugelförmige Oberfläche (26) der inneren Einheit und/oder die korrespondierende Kontaktfläche (28) der äußeren Einheit (18), insbesondere mit einer Molybdän aufweisenden Beschichtung, beschichtet sind.

5. Prüfstand (2) nach einem der vorherigen Ansprüche,
wobei die innere Einheit (20) zumindest zweiteilig ausgeführt ist.

6. Prüfstand (2) nach einem der vorherigen Ansprüche,
wobei die Antriebsachse (4) über eine Adaptereinheit (42) in der Ausnehmung (40) der inneren Einheit 20 aufgenommen ist.

7. Prüfstand (2) nach Anspruch 6,
wobei die Adaptereinheit (42) über Verbindungselemente (44), insbesondere Schrauben oder Bolzen, mit den originalen Aufhängepunkten der Antriebsachse 4 verbunden ist.

8. Prüfstand (2) nach einem der vorherigen Ansprüche, wobei die Antriebsachse (4) von der Aufnahmevorrichtung (6) an originalen Aufhängepunkten translatorisch fest und rotatorisch flexibel aufgenommen ist.

9. Prüfstand (2) nach einem der vorherigen Ansprüche,
wobei die Belastungsvorrichtung (12) Mittel zur Radnabenlagerung aufweist, über welche eine Belastungsmaschine (14) mit der Antriebsachse (4) verbindbar ist.

10. Prüfstand (2) nach Anspruch 9,
wobei die Mittel zur Radnabenlagerung eine Lagereinheit (16) zur Aufnahme einer axialen Kraft umfassen.

11. Prüfstand (2) nach einem der vorherigen Ansprüche,
wobei die Belastungsvorrichtung (12) mindestens einen Hydraulikzylinder (32) zur Belastung der Antriebsachse (4) mit einer, insbesondere dynamischen, Zusatzkraft aufweist.

12. Prüfstand (2) nach einem der vorherigen Ansprüche,
wobei die Belastungsvorrichtung (12) Druckstangen (34) zur Übertragung einer, insbesondere dynamischen, Zusatzkraft aufweist.

13. Prüfstand (2) nach einem der vorherigen Ansprüche, aufweisend einen Schwenkantrieb (30) zur Simulation einer Steigung und/oder eines Gefälles.

14. Prüfstand (2) nach einem der vorherigen Ansprüche, aufweisend Mittel zur schwingungstechnischen Entkopplung des Prüfstands (2) von einem Fundament (22).

15. Prüfstand (2) nach Anspruch 14,
wobei die Mittel zur schwingungstechnischen Entkopplung des Prüfstands (22) Federelemente (24) umfassen.

16. Verfahren zum Prüfen einer Antriebsachse (4) für ein Kraftfahrzeug in einem Prüfstand (2) mit mindestens einer Antriebsvorrichtung (6), mindestens einer Belastungsvorrichtung (12) und mindestens einer Aufnahmevorrichtung (6) zur Aufnahme der Antriebsachse (4) eines Kraftfahrzeugs, **dadurch gekennzeichnet, dass** die Aufnahmevorrichtung (6) mindestens eine äußere Einheit (18) zur Verbindung mit dem Prüfstand (2) und mindestens eine von der äußeren Einheit (18) zumindest teilweise umschlossene innere Einheit (20) aufweist,
wobei die innere Einheit (20) relativ zur äußeren Einheit (18) translatorisch fest und um mehr als eine Achse rotatorisch flexibel angeordnet wird und
wobei die Antriebsachse (4) von einer Ausnehmung (40) der inneren Einheit (20) aufgenommen wird.

17. Verfahren nach Anspruch 16,
wobei die Antriebsachse (4) antriebsseitig angetrieben und abtriebsseitig gebremst wird,
wobei die Antriebsachse (4) in einem angetriebenen Zustand durch eine von Antrieb und Bremsen unabhängige, insbesondere dynamische, Zusatzkraft belastet wird.

18. nach einem der Ansprüche 16 oder 17,
wobei eine, insbesondere dynamische, Zusatzkraft hydraulisch erzeugt wird,

19. Verfahren nach Anspruch 18,
wobei eine hydraulisch erzeugte Zusatzkraft gemessen wird.

20. Verfahren nach einem der Ansprüche 16 bis 19,
wobei eine Zusatzkraft von Druckstangen (34) übertragen wird.

21. Verfahren nach einem der Ansprüche 16 bis 20,
wobei eine axiale Kraft durch mindestens eine Lagereinheit (16) aufgenommen wird.

22. Verfahren nach einem der Ansprüche 16 bis 21,
wobei durch einen Schwenkantrieb eine Steigung und/oder ein Gefälle simuliert werden.

23. Verfahren nach einem der Ansprüche 16 bis 22,
wobei der Prüfstand schwingungstechnisch von einem Fundament entkoppelt wird.

## Claims

1. Test bench (2) for testing a drive axle (4) for a motor vehicle having at least one drive device (8), at least one loading device (12) and at least one receptacle device (6) for receiving the drive axle (4) of a motor vehicle, **characterised in that** the receptacle device (6) has at least one outer unit (18) for connection to the test bench (2) and at least one inner unit (20) enclosed at least in part by the outer unit (18),
wherein the inner unit (20) is translationally fixed relative to the outer unit (18) and is designed to be flexibly rotatable about more than one axis, and
wherein the inner unit (20) has a recess (40) suitable for receiving the drive axle (4).

2. Test bench (2) according to claim 1,
wherein the inner unit (20) has a partially spherical surface (26) .

3. Test bench (2) according to claim 2,
wherein the outer unit (18) has a contact surface (28) which corresponds to the partially spherical surface (26) of the inner unit (20) at least in the region of a contact surface for the inner unit (20).

4. Test bench (2) according to one of claims 2 or 3,
wherein the partially spherical surface (26) of the inner unit and/or the corresponding contact surface (28) of the outer unit (18) are coated, in particular with a coating having molybdenum.

5. Test bench (2) according to one of the preceding claims, wherein the inner unit (20) is configured in at least two parts.

6. Test bench (2) according to one of the preceding claims, wherein the drive axle (4) is received via an adapter unit (42) in the recess (40) of the inner unit 20.

7. Test bench (2) according to claim 6,
wherein the adapter unit (42) is connected to the original suspension points of the drive axle 4 by way of connecting elements (44), in particular screws or bolts.

8. Test bench (2) according to one of the preceding claims, wherein the drive axle (4) is received by the receptacle device (6) on original suspension points in a translationally fixed and flexibly rotatable manner.

9. Test bench (2) according to one of the preceding claims, wherein the loading device (12) has wheel hub bearing means via which a loading machine (14) can be connected to the drive axle (4).

10. Test bench (2) according to claim 9,
wherein the wheel hub bearing means comprise a bearing unit (16) for absorbing an axial force.

11. Test bench (2) according to one of the preceding claims, wherein the loading device (12) has at least one hydraulic cylinder (32) for loading the drive axle (4) with an in particular dynamic additional force.

12. Test bench (2) according to one of the preceding claims, wherein the loading device (12) has push rods (34) for transmitting an in particular dynamic additional force.

13. Test bench (2) according to one of the preceding claims, having a part-turn drive (30) for simulating an ascending gradient and/or a descending gradient.

14. Test bench (2) according to one of the preceding claims, having means for vibrationally isolating the test bench (2) from a foundation (22).

15. Test bench (2) according to claim 14,
wherein the means for vibrationally isolating the test bench (22) comprise spring elements (24).

16. Method for testing a drive axle (4) for a motor vehicle on a test bench (2) having at least one drive device (6), at least one loading device (12) and at least one receptacle device (6) for receiving the drive axle (4) of a motor vehicle, **characterised in that** the receptacle device (6) has at least one outer unit (18) for connection to the test bench (2) and at least one inner unit (20) enclosed at least in part by the outer unit (18),
wherein the inner unit (20) is translationally fixed relative to the outer unit (18) and is arranged to be flexibly rotatable about more than one axis, and
wherein the drive axle (4) is received by a recess (40) of the inner unit (20).

17. Method according to claim 16,
wherein the drive axle (4) is driven on the drive side and braked on the output side,
wherein the drive axle (4) is loaded in a driven state by an, in particular dynamic, additional force unrelated to driving and braking.

18. according to one of claims 16 or 17,
wherein an in particular dynamic additional force is generated hydraulically.

19. Method according to claim 18,
wherein a hydraulically generated additional force is measured.

20. Method according to one of claims 16 to 19,
wherein an additional force is transmitted by push rods (34).

21. Method according to one of claims 16 to 20,
wherein an axial force is absorbed by at least one bearing unit (16).

22. Method according to one of claims 16 to 21,
wherein an ascending gradient and/or a descending gradient are simulated by a part-turn drive.

23. Method according to one of claims 16 to 22,
wherein the test bench is vibrationally isolated from a foundation.

## Revendications

1. Banc (2) d'essai pour contrôler un essieu (4) moteur d'un véhicule automobile, comprenant au moins un dispositif (8) d'entraînement, au moins un dispositif (12) de charge et au moins un dispositif (6) de réception pour la réception de l'essieu (4) moteur d'un véhicule automobile, **caractérisé en ce que** le dispositif (6) de réception a au moins une unité (18) extérieure de liaison au banc (2) d'essai et au moins une unité (20) intérieure entourée au moins en partie de l'unité (18) extérieure,
dans lequel l'unité (20) intérieure est, par rapport à l'unité (18) extérieure, conformée fixe en translation et souple en rotation autour de plus d'un axe,
dans lequel l'unité (20) intérieure a un évidement (40) propre à la réception de l'essieu (4) moteur.

2. Banc (2) d'essai suivant la revendication 1,
dans lequel l'unité (20) intérieure a une surface (26) en partie sphérique.

3. Banc (2) d'essai suivant la revendication 2,
dans lequel l'unité (18) extérieure a, au moins dans la partie d'une surface de support de l'unité (20) intérieure, une surface (28) de contact correspondant à la surface (26) en partie sphérique de l'unité (20) intérieure.

4. Banc (2) d'essai suivant l'une des revendications 2 ou 3, dans lequel la surface (26) en partie sphérique de l'unité intérieure et/ou la surface (28) de contact correspondante de l'unité (18) extérieure sont revêtues notamment d'un revêtement ayant du molybdène.

5. Banc (2) d'essai suivant l'une des revendications précédentes, dans lequel l'unité (20) intérieure est réalisée au moins en deux parties.

6. Banc (2) d'essai suivant l'une des revendications précédentes, dans lequel l'essieu (4) moteur est reçu par l'intermédiaire d'une unité (42) formant adaptateur dans l'évidement (40) de l'unité (20) intérieure.

7. Banc (2) d'essai suivant la revendication 6,
dans lequel l'unité (42) formant adaptateur est reliée par des éléments (44) de liaison, notamment des vis ou des boulons, aux points de suspension d'origine de l'essieu (4) moteur.

8. Banc (2) d'essai suivant l'une des revendications précédentes, dans lequel l'essieu (4) moteur est reçu par le dispositif (6) de réception, fixe en translation et souple en rotation, aux points de suspension d'origine.

9. Banc (2) d'essai suivant l'une des revendications précédentes, dans lequel le dispositif (12) de charge a des moyens de fixation de moyeux de roue, par lesquels une machine (14) de charge peut être reliée à l'essieu (4) moteur.

10. Banc (2) d'essai suivant la revendication 9,
dans lequel les moyens de fixation de moyeux de roue comprennent une unité (16) de palier d'absorption d'une force axiale.

11. Banc (2) d'essai suivant l'une des revendications précédentes, dans lequel le dispositif (12) de charge a au moins un vérin (32) hydraulique pour appliquer à l'essieu (4) moteur une force supplémentaire, notamment dynamique.

12. Banc (2) d'essai suivant l'une des revendications précédentes, dans lequel le dispositif (12) de charge a des barres (34) de pression pour la transmission d'une force supplémentaire, notamment dynamique.

13. Banc (2) d'essai suivant l'une des revendications précédentes, comportant un mécanisme (30) de pivotement pour la simulation d'une montée et/ou d'une descente.

14. Banc (2) d'essai suivant l'une des revendications précédentes, comportant des moyens de découplage en technique de vibration du banc (2) d'essai d'une fondation (22).

15. Banc (2) d'essai suivant la revendication 14,
dans lequel les moyens de découplage en technique de vibration du banc (22) d'essai comprennent des éléments (24) de ressort.

16. Procédé pour faire l'essai d'un essieu (4) moteur d'un véhicule automobile dans un banc (2) d'essai, comprenant au moins un dispositif (6) d'entraînement, au moins un dispositif (12) de charge et au moins un dispositif (6) de réception pour la réception de l'essieu (4) moteur d'un véhicule automobile, **caractérisé en ce que**
le dispositif (6) de réception a au moins une unité (18) extérieure de liaison au banc (2) d'essai et au moins une unité (20) intérieure entourée au moins en partie de l'unité (18) extérieure, dans lequel on monte, fixe en translation et souple en rotation autour de plus d'un axe, l'unité (20) intérieure par rapport à l'unité (18) extérieure et
on reçoit l'essieu (4) moteur dans un évidement (40) de l'unité (20) intérieure.

17. Procédé suivant la revendication 16,
dans lequel on entraîne du côté menant l'essieu (4) moteur et on le freine du côté mené,
dans lequel on charge l'essieu (4) moteur dans un état entraîné par une force supplémentaire, notamment dynamique, indépendante de l'entraînement et du freinage.

18. Procédé suivant l'une des revendications 16 ou 17,
dans lequel on produit hydrauliquement une force supplémentaire, notamment dynamique.

19. Procédé suivant la revendication 18,
dans lequel on mesure une force supplémentaire produite hydrauliquement.

20. Procédé suivant l'une des revendications 16 à 19,
dans lequel on transmet une force supplémentaire par des barres (34) de pression.

21. Procédé suivant l'une des revendications 16 à 20,
dans lequel on absorbe une force axiale par au moins une unité (16) de palier.

22. Procédé suivant l'une des revendications 16 ou 21,
dans lequel on simule une montée et/ou une descente par un mécanisme de pivotement.

23. Procédé suivant l'une des revendications 16 à 22,
dans lequel on découple le banc d'essai en technique de vibration d'une fondation.
